# EUROPÄISCHE PATENTANMELDUNG

(11) **EP 4 756 382 A1**
(43) Veröffentlichungstag der Anmeldung: **10.06.2026**
(21) Anmeldenummer: 25217731.6
(22) Anmeldetag: 21.11.2025
(51) Int. Cl.: G01D 5/14, G01D 5/245, G01D 5/04, G01D 11/24

(54) **DREHSENSOR UND LENKSYSTEM FÜR EIN KRAFTFAHRZEUG**

(30) Priorität: 03.12.2024 BE 202405852
(71) Anmelder: thyssenkrupp Presta AG, 9492 Eschen (LI); thyssenkrupp AG, 45143 Essen (DE)
(72) Erfinder: Campos, Adrian, 9472 Grabs (CH)
(74) Vertreter: thyssenkrupp Intellectual Property GmbH

(57) **Zusammenfassung**

Die vorliegende Erfindung betrifft einen Drehsensor (3) für ein Lenksystem (1) eines Kraftfahrzeug, umfassend ein Hohlrad (7), welches in einem Gehäuse (31) um eine Achse (A) drehbar gelagert ist, und eine Innenverzahnung und ein zur Verbindung mit einer um ihre Längsachse (L) drehbaren Lenkwelle (22) ausgebildetes Kupplungselement aufweist,
wobei das Gehäuse (31) eine axiale Stirnwand (32), eine axiale Innenwand (34), und eine koaxial umlaufende Umfangswand (33) aufweist, wobei das Hohlrad (7) axial zwischen der Stirnwand (32) und der Innenwand (34) angeordnet ist und von der Umfangswand (33) bezüglich der Achse (A) umlaufend umschlossen ist, und wobei mindestens Messrad (71, 72), das ein Magnetelement (73, 74) aufweist, in dem Gehäuse (31) drehbar gelagert ist und mit iseiner Außenverzahnung in die Innenverzahnung des Hohlrads (7) eingreift, und
wobei in dem Gehäuse (31) mit den Magnetelementen (73, 74) des Messrads (71, 72) zusammenwirkende Messelemente (77) angebracht sind. Um die Betriebssicherheit zu verbessern und eine kompaktere Bauweise zu ermöglichen, schlägt die Erfindung vor, dass die Stirnwand (32) und die Innenwand (34) über einen von der Innenverzahnung umschlossenen Innenraum durchgehend geschlossen ausgebildet sind.

## Beschreibung

### Stand der Technik

Die Erfindung betrifft einen Drehsensor für ein Lenksystem eines Kraftfahrzeug, umfassend ein Hohlrad, welches in einem Gehäuse um eine Achse drehbar gelagert ist, und eine Innenverzahnung und ein zur Verbindung mit einer um ihre Längsachse drehbaren Lenkwelle ausgebildetes Kupplungselement aufweist, wobei das Gehäuse eine axiale Stirnwand, eine axiale Innenwand, und eine koaxial umlaufende Umfangswand aufweist, wobei das Hohlrad axial zwischen der Stirnwand und der Innenwand angeordnet ist und von der Umfangswand bezüglich der Achse umlaufend umschlossen ist, und wobei mindestens ein Messrad, das ein Magnetelement aufweist, in dem Gehäuse drehbar gelagert sind und mit seiner Außenverzahnung in die Innenverzahnung des Hohlrads eingreift, und wobei in dem Gehäuse mit dem Magnetelement des Messrads zusammenwirkende Messelemente angebracht sind. Ein Lenksystem für ein Kraftfahrzeug mit einem derartigen Drehsensor ist ebenfalls Gegenstand der Erfindung.

Bei einem Steer-by-Wire-Lenksystem eines Kraftfahrzeugs erfasst ein elektrischer Drehsensor die durch manuelle Betätigung einer Lenkhandhabe erzeugte Verdrehung einer Lenkwelle, beispielsweise der Lenkspindel einer Lenksäule. Aus den Winkel-Messwerten werden elektrische Steuersignale zur Ansteuerung eines elektrischen Lenkantriebs generiert, der einen entsprechenden Lenkeinschlag der gelenkten Räder bewirkt. Mittels eines derartigen Drehsensors kann auch die Drehung einer anderen Lenkwelle, dies ist eine direkt oder mittelbar mit der Lenkung zusammenwirkende Welle, gemessen werden.

Ein gattungsgemäßer Drehsensor ist beispielsweise in der JP 2009262848 A beschrieben. Dieser umfasst ein mit der Lenkwelle gekuppeltes Hohlrad mit einer um eine Achse umlaufenden Innenverzahnung. Im Inneren des Hohlrads sind zwei Messräder angeordnet, die unterschiedliche Zähnezahlen aufweisen, und mit dem Hohlrad in Verzahnungseingriff stehen. Jedes der Messräder weist ein mitrotierendes Magnetelement aus, dessen winkelabhängiges Magnetfeld jeweils von einem zugeordneten, relativ zum Gehäuse fixierten Messelement erfasst wird. Aus den gemessenen Magnetfeldern der beiden Messräder kann die Winkelposition des Hohlrads und damit der Lenkwelle über mehrere Umdrehungen eindeutig bestimmt werden.

Bei dem bekannten Drehsensor ist das Hohlrad zusammen mit den Messrädern und den Messelementen in einem Gehäuse untergebracht. Es weist eine axial vor dem Hohlrad angeordnete Stirnwand, eine axial auf der anderen Seite des Hohlrads angeordnete Innenwand, und eine zwischen der Stirn- und Innenwand angeordnete, um das Hohlrad umlaufende Umfangswand oder Mantelwand auf, wodurch ein Gehäuseinnenraum begrenzt wird. Die Lenkwelle ist durch zentrale Lageröffnungen der Innenwand und der Stirnwand axial hindurchgeführt und darin drehbar gelagert. Im Gehäuseinnenraum ist das Hohlrad mittels einer Nabe drehfest auf der Lenkwelle fixiert. Damit sind sämtliche Funktionselemente des Sensors in dem Gehäuse integriert. Es ist jedoch nachteilig, dass die drehbare Lenkwelle durch den Gehäuseinnenraum hindurchgeführt ist, in dem die Messräder zusammen mit der Sensorelektronik untergebracht sind. Durch die Lagerungen der Lenkwelle können potentiell schädliche äußere Einflüsse eindringen und die Funktion beeinträchtigen. Weiterhin müssen die Funktionselemente relativ zu dem im Innenraum rotierenden Hohlrad geschützt angeordnet sein. Daraus resultiert ein relativ großer Bauraumbedarf, der ebenfalls als nachteilig empfunden wird.

Es sind im Stand der Technik auch Ausführungen mit einem Messrad bekannt.

Angesichts der vorangehend erläuterten Problematik ist es eine Aufgabe der vorliegenden Erfindung, die Betriebssicherheit zu verbessern und eine kompaktere Bauweise zu ermöglichen.

### Darstellung der Erfindung

Diese Aufgabe wird erfindungsgemäß gelöst durch den Drehsensor mit den Merkmalen des Anspruchs 1 und das das Lenksystem gemäß Anspruch 15. Vorteilhafte Weiterbildungen ergeben sich aus den Unteransprüchen.

Bei einem Drehsensor für ein Lenksystem eines Kraftfahrzeug, umfassend ein Hohlrad, welches in einem Gehäuse um eine Achse drehbar gelagert ist, und eine Innenverzahnung und ein zur Verbindung mit einer um ihre Längsachse drehbaren Lenkwelle ausgebildetes Kupplungselement aufweist, wobei das Gehäuse eine axiale Stirnwand, eine axiale Innenwand, und eine koaxial umlaufende Umfangswand aufweist, wobei das Hohlrad axial zwischen der Stirnwand und der Innenwand angeordnet ist und von der Umfangswand bezüglich der Achse umlaufend umschlossen ist, und wobei mindestens ein Messrad, dass ein Magnetelement aufweist, in dem Gehäuse drehbar gelagert ist und mit seinerAußenverzahnung in die Innenverzahnung des Hohlrads eingreift, und wobei in dem Gehäuse mit den Magnetelementen des Messrads zusammenwirkende Messelemente angebracht sind, ist erfindungsgemäß vorgesehen, dass die Stirnwand und die Innenwand über einen von der Innenverzahnung umschlossenen Innenraum durchgehend geschlossen ausgebildet sind.

Bevorzugt kann vorgesehen sein, dass in dem Gehäuse mindestens zwei Messräder drehbar gelagert sind, die jeweils ein Magnetelement aufweisen, und jeweils mit ihrer Außenverzahnung in die Innenverzahnung des Hohlrads eingreifen, und wobei in dem Gehäuse mit den Magnetelementen der Messräder zusammenwirkende Messelemente angebracht sind. Die beiden Messräder haben unterschiedliche Zähnezahlen und ermöglichen dadurch die Realisierung eines Nonius-Messprinzips. Soweit im Folgenden von den Messrädern die Rede ist, sollen damit sowohl Ausführungen mit einem, als auch mit zwei oder mehr Messrädern umfasst sein.

Im Folgenden wir unter einer Lenkwelle ganz allgemein eine drehbare oder drehend antreibbare Welle eines Kraftfahrzeug-Lenksystems verstanden, deren Drehung durch den Drehsensor erfasst werden kann. Die Lenkwelle kann beispielsweise eine manuell drehbare Lenkspindel einer Lenksäule umfassen, bevorzugt einer Steer-by-Wire-Lenksäule, ist jedoch nicht darauf beschränkt.

Die Innenverzahnung ist auf dem Innenumfang des Hohlrads koaxial um die Achse umlaufend ausgebildet. Die mindestens zwei Messräder, die Außenverzahnungen mit unterschiedlichen Zähnezahlen aufweisen, sind im Verzahnungseingriff im Innenraum des Hohlrads, innerhalb der Innenverzahnung drehbar gelagert. Der von dem Zahnkranz umschlossene Innenraum kann gleichbedeutend auch als Durchgang der Innenverzahnung oder kurz als Durchgang bezeichnet werden, Dabei ist es durchaus denkbar und möglich, dass dieser Durchgang axial durch eine ganz oder teilweise durchgehende Wand geschlossen ist. In diesem Fall könnte der Innenraum des Hohlrads topfförmig ausgebildet sein, der zur Innenwand hin axial offen ist.

Die Stirnwand des Gehäuses ist bezüglich des Hohlrads axial außen angeordnet und ist erfindungsgemäß durchgehend geschlossen. Damit bildet sie eine äußere Gehäusewand, die keinerlei durchgehende Durchgangsöffnungen aufweist, im Unterschied zum Stand der Technik mit der der durch die Stirnwand durchgehenden Lagerbohrung für die Lenkwelle. An die Stirnwand schließt sich eine umlaufende Umfangswand des Gehäuses an, die rohrförmig, bevorzugt hohlzylindrisch ausgebildet sein kann. Auf der gegenüberliegenden Axialseite weist das Gehäuse die Innenwand auf. Damit ist das Hohlrad axial zwischen der Innenwand und der Stirnwand angeordnet. Entsprechend wird der Gehäuseinnenraum, in dem das Hohlrad drehbar aufgenommen ist, axial durch die Stirnwand und radial durch die Umfangswand begrenzt.

Das Hohlrad weist einen ringförmigen Zahnkranz auf, dessen Innenverzahnung einen axial beiderseits offenen Innenquerschnitt über den Umfang umlaufend umschließt und somit bezüglich der Achse radial nach außen begrenzt. Der Innenraum erstreckt sich quer zur Achse über den von der Innenverzahnung umschlossenen Innenquerschnitt des Hohlrads, und axial, d.h. in Achsrichtung zwischen den gegeneinander gerichteten, erfindungsgemäß durchgehend geschlossenen Axialflächen der Innenwand und der Stirnwand.

Die axiale Breite des Innenraums ist damit größer oder gleich der axialen Breite der Innenverzahnung.

Entsprechend ist der Innenraum zwischen der Stirn- und der Innenwand im Wesentlichen zylindrisch ausgebildet. Sein freier, im Wesentlichen kreisscheibenförmiger Durchgangsquerschnitt zwischen den radial nach innen vorstehenden Zahnspitzen der Innenverzahnung gemessen werden.

Erfindungsgemäß decken die Stirnwand und die Innenwand den Innenraum des Hohlrads durchgehend axial ab. Dabei weisen sie im Bereich des Durchgangsquerschnitts des Hohlrads, d.h. der Innenverzahnung keine Öffnungen oder Durchbrechungen auf. Insbesondere ist keine zentrale, axial durchgehende Lageröffnung für eine Lenkwelle vorgesehen. Diese erstreckt sich in dem eingangs genannten Stand der Technik durch die Innenwand und die Stirnwand hindurch.

Ein Vorteil der erfindungsgemäßen Anordnung ist, dass der gesamte Innenraum des Hohlrads für die Anordnung der funktionalen Elemente der Sensoranordnung zur Verfügung steht, beispielsweise für die Anordnung und Lagerung der Messräder, der Anordnung der damit zusammenwirkenden Messelemente, sowie der Anordnung und Ausgestaltung von damit zusammenwirkenden elektrischen Schaltungen und dergleichen. Daraus resultiert eine größere konstruktive Gestaltungsfreiheit, und die Möglichkeit einer Bauraumreduzierung und einer funktionalen Optimierung.

Ein weiterer Vorteil ist, dass die gesamte Messanordnung einschließlich der Messräder, der Messelemente und der elektrischen Schaltungen besser gegen potentiell schädliche äußere Einflüsse geschützt im Innenraum des Hohlrads untergebracht werden kann, beispielsweise gegen Eindringen von Verunreinigungen durch die Lageröffnungen der Lenkwelle.

Dadurch, dass das Hohlrad im Gehäuseinnenraum keine mit der Lenkwelle verbundene Nabe aufweist, ist der von dem Hohlrad umschlossene Innenraum frei von sich drehenden Teilen, so dass keine Schutzmaßnahmen wie im Stand der Technik erforderlich sind und entsprechend eine kompaktere Bauform ermöglicht wird.

Es ist weiterhin vorteilhaft, dass eine optimierte Anbringung des Drehsensors an einem axialen Ende einer Lenkwelle ermöglich wird. Hierzu ist es lediglich erforderlich, die Übertragung des Drehmoments von einem axialen Ende der Lenkwelle auf das Hohlrad zu ermöglichen.

Hierzu werden im Folgenden beispielhaft vorteilhafte Lösungsmöglichkeiten vorgeschlagen. Diese ermöglichen insbesondere eine vorteilhafte Integration des Drehsensors in eine Steer-by-Wire-Lenksäule, bei der die die Lenkwelle eine manuell drehbare Lenkspindel umfasst, die nicht mechanisch mit den lenkbaren Rädern verbunden ist. Dabei kann bevorzugt am vorderen Ende der Lenkspindel ein erfindungsgemäßer Drehsensor zur Erfassung von manuellen Lenkbefehlen angebracht sein.

Bevorzugt kann dass das Hohlrad einen umfangsseitig von der Innenverzahnung begrenzten axialen Durchgang aufweisen. Das Hohlrad kann als ringförmiger, offener Zahnkranz ausgebildet sein. Dessen freier Durchgangsquerschnitt kann bevorzugt im Wesentlichen durch die Innenverzahnung, d.h. ausschließlich durch die Zahnoberflächen begrenzt sein. Dadurch, dass die Lenkwelle nicht durch den Innenraum zwischen Stirn- und Innenwand durchgeführt ist, weist das Hohlrad im Innenraum keine mit der Lenkwelle verbundene Nabe auf, und der Innenraum ist in vorteilhafter Weise frei von rotierenden Teilen.

Es ist vorteilhaft, dass das Hohlrad axial gegen die Stirnwand und/oder die Innenwand abgedichtet ist. Die Abdichtung kann vorzugsweise durch ringförmig koaxial um die Achse, außen um den Innenraum umlaufende, ringförmige Dichtelemente realisiert sein, die zwischen einander axial gegenüberliegenden Flächen des Hohlrads und der Innenwand oder/und der Stirnwand angeordnet sind. Ein derartiges Dichtelement kann beispielsweise eine Axialdichtung, beispielsweise mit einem Dichtring umfassen, der mit einem vorgegebenen Radius um die Achse umläuft. Bevorzugt kann es ausgebildet sein, um eine reibungsarme Drehung des Hohlrads relativ zum Gehäuse zu ermöglichen.

Es kann vorgesehen sein, dass das Hohlrad in einer Axiallageranordnung an der Stirnwand und/oder der Innenwand gelagert ist. Eine derartige Axiallageranordnung ermöglicht eine drehbare Lagerung ohne ein zentral durchgehendes, radiales Lagerelement, wie dies im Stand der Technik durch die zentralen durchgehenden Lagerbohrungen in der Stirnwand und der Innenwand realisiert ist. Im Gegensatz dazu weist die Axiallageranordnung keine zentrale Lagerbohrung auf. Die Stirnwand und/oder die Innenwand ist im Bereich der Achse geschlossen. Die Axiallageranordnung kann in oder an den axial einander gegenüberliegenden Axialflächen des Hohlrads und der Stirnwand bzw. der Innenwand ausgebildet sein. Beispielweise können auf einer Axialfläche ein axial vorstehender, koaxialer Ringvorsprung angeordnet sein, der in eine korrespondierende Ringnut in der Gegenüberliegenden Axialfläche eingreift. Ein Ringvorsprung und/oder eine Ringnut können einfach auf einer oder beiden Axialseiten an einem ringförmigen Hohlrad ausgebildet sein. Alternativ kann auch ein zapfenartiger axial vorstehender zentraler Lagervorsprung vorgesehen sein, der in eine korrespondierende konkave Einformung des Hohlrads eingreift, die jedoch keine axial durch die Stirn- oder Innenwand durchgehende Öffnung aufweist. Der Vorteil einer derartigen Axiallageranordnung ist, dass der Innenraum des Hohlrads durch Die Stirnwand und die Innenwand durchgehend geschlossen abgedeckt sein kann, und insbesondere keine durchgehenden Lagerbohrungen wie im Stand der Technik vorhanden sind.

Eine axiale Lagerung kann dadurch realisiert sein, dass die Innenwand in einer Lagervertiefung des Hohlrads drehbar eingesetzt ist. Bei dieser Ausführung kann die Innenwand selbst als eine Art axialer Deckel ausgebildet sein, der formschlüssig in eine axiale Lagervertiefung des Hohlrads eingesetzt ist, die um den Innenraum umlaufend ausgebildet ist. Anders ausgedrückt ist das Hohlrad auf der Innenwand selbst drehbar gelagert. Dabei können Lagerflächen an der außen umlaufende Umfangsfläche und einer im Randbereich liegenden Axialfläche angeordnet sein. Der Vorteil ist ein konstruktiv einfache Ausführung mit wenigen Bauteilen, und ein durchgehend sicher geschlossener Innenraum.

Es ist möglich, dass die Innenwand über mindesten ein durch den Innenraum axial durchgehendes Verbindungsmittel mit der Stirnwand verbunden ist. Die einander gegenüberliegenden Innenseiten der Stirnwand und der Innenwand, die den Innenraum axial beiderseits begrenzen, können beispielsweise über ein oder mehrere Verbindungselemente verbunden sein. Beispielsweise kann die Stirnwand einen oder mehrere axiale Vorsprünge aufweisen, an denen die Innenwand axial abgestützt und fixiert ist. Vorzugsweise können die Verbindungsmittel ausgestaltet sein, um die Innenwand relativ zur Stirnwand in einem definierten axialen Abstand zu positionieren, so dass eine Drehlagerung des axial dazwischen angeordneten Hohlrads ermöglicht wird. Es wird eine vorteilhaft kompakte Bauweise mit relativ wenigen Bauteilen ermöglicht.

Eine vorteilhafte Ausführung kann vorsehen, dass außen um die Innenwand ein koaxialer, axial offener Ringspalt ausgebildet ist. Der Ringspalt hat bevorzugt einen kreisringförmigen axialen Durchgangsquerschnitt uns ist kann zwischen einem Außenumfang der Innenwand und einem hohlzylindrischen Innenumfang des Gehäuses umlaufend angeordnet sein. Der Innenumfang kann auf der radialen Innenseite der umlaufenden Mantel- oder Umfangswand des Gehäuses ausgebildet sein, die den Aufnahmeraum des Gehäuses begrenzt. In dem Aufnahmeraum ist das Hohlrad derart angeordnet, beispielsweise axial benachbart, dass ein Kupplungselement zur Verbindung des Hohlrads mit einer um ihre Längsachse drehbaren Lenkwelle in dem Ringspalt angeordnet sein kann. Das Kupplungselement kann im Bereich des ringförmigen Öffnungsquerschnitts des Ringspalts aus der axialen Innenseite des Hohlrads ausgebildet sein. Es können ein oder mehrere Kupplungselemente vorgesehen sein, die sich von dem Hohlrad axial durch den Ringspalt hindurch erstrecken. Auf der Antriebsseite, d.h. die auf der dem Hohlrad abgewandten Axialseite der Innenwand liegt, kann eine drehend antreibbare Lenkwelle mit dem Kupplungselement drehschlüssig gekuppelt sein. Dadurch kann in vorteilhafter Weise eine zu messende Drehbewegung in das Hohlrad eingekoppelt werden.

In der vorgenannten Ausführung kann vorgesehen sein, dass das Kupplungselement sich axial durch den Ringspalt erstreckt. Das Kupplungselement ist ausgebildet zur Einkopplung eines Drehmoments von einer Lenkwelle, die auf der dem Hohlrad abgewandten Axialseite der Innenwand angeordnet ist. Diese kann beispielsweise ein axial gegen due Innenwand gerichtetes Wellenende aufweisen, wie etwa das vordere Ende einer Lenkspindel einer Steer-by-Wire-Lenksäule. Eine vorteilhafte Ausführung kann beispielsweise dadurch realisiert sein, dass ein Zahnkranz, beispielsweise ein Innen-Zahnkranz, mit dem ein mit der Lenkwelle bzw. Lenkspindel verbundenes Antriebsrad im Verzahnungseingriff steht, durch den Ringspalt hindurchmit dem Hohlrad verbunden ist. Dabei kann bevorzugt vorgesehen sein, dass das Kupplungselement einteilig oder einstückig mit dem Hohlrad ausgebildet ist. Es ist alternativ auch möglich, dass das Kupplungselement einen drehmomentschlüssigen Kupplungseingriff zwischen der Lenkwelle und dem Hohlrad ermöglicht, beispielsweise nach Art einer an sich bekannten Zapfen- oder Klauenkupplung. Diese kann in axialer Richtung zumindest mittelbar durch den Ringspalt hindurch durchgreifen.

Es ist vorteilhaft, dass das Gehäuse topfförmig ausgebildet ist. Das Gehäuse kann eine topf-, becher- oder haubenförmige Grundform aufweisen, die aus der erfindungsgemäß geschlossenen Stirnwand und der damit verbundenen, im Wesentlichen rohrabschnittförmigen, vorzugsweise hohlzylindrischen Umfangswand ausgebildet ist. Der vorzugsweise zylindrische Innenraum kann auf der der Stirnwand axial abgewandten Antriebsseite durch die erfindungsgemäß ausgestaltete Innenwand begrenzt sein. Dabei kann die Innenwand zur Realisierung einer kompakten, geschützten Bauform innerhalb des Gehäuses oder zumindest daran angrenzend angebracht sein.

Es kann vorgesehen sein, dass die Stirnwand zusammen mit der Umfangswand einstückig ausgebildet ist. Eine einstückige Formgebung kann beispielsweise durch ein Metall-Druckgussteil oder ein Kunststoff-Spritzgussteil realisiert werden, ein Blech-Formteil oder dergleichen realisiert sein und ermöglicht eine rationelle Fertigung.

Es ist möglich, dass das Gehäuse Befestigungsmittel aufweist. Das oder die Befestigungsmittel dienen zur Befestigung an einem Kraftfahrzeug-Lenksystem, beispielsweise zur Anbringung an einer Lenksäule. Bevorzugt sind diese außen an dem Gehäuse angeordnet, beispielsweise als Befestigungsflansch, der an der Stirnwand oder der Umfangswand angeordnete Vorsprünge mit Flanschbohrungen oder dergleichen aufweisen kann. Die Befestigungsmittel können einstückig mit dem Gehäuse ausgebildet sein, beispielsweise im Druck- oder Spritzgussverfahren. Dies ermöglicht eine rationelle Fertigung und eine einfache Montage, beispielsweise durch endseitiges Anflanschen an eine Lenksäule.

Es ist vorzugsweise möglich, dass die Messräder an der Stirnwand gelagert sind. An der dem Hohlrad zugewandten Innenseite können zur Lagerung der Messräder ausgestaltete Lagerelemente an der Stirnwand angebracht oder ausgebildet sein, beispielsweise in den Innenraum des Hohlrads vorstehende Lagerzapfen, auf denen die Messräder drehbar gelagert sind. Dadurch wird eine einfache Montage der Messräder durch axiales Aufstecken auf die Lagerzapfen ermöglicht. Dabei kann der Verzahnungseingriff mit der Innenverzahnung des Hohlrads erzeugt werden. Für eine rationelle Fertigung ist es vorteilhaft, dass die Lagerelemente, beispielsweise axiale Lagerzapfen, einstückig an die Stirnwand angeformt sind, beispielsweise im Druck- oder Spritzgussverfahren.

Eine vorteilhafte Weiterbildung kann dadurch realisiert sein, dass die Innenwandung eine Platine aufweist. Eine Platine bezeichnet allgemein eine elektrische Leiterplatte, bevorzugt als ein- oder mehrlagige gedruckte Leiterplatte, welche als Träger für Bauteile einer elektronischen Schaltung dient und auf einer Isolierplatte angeordnete elektrische Leiterbahnen zur Verschaltung der Bauteile aufweist. Die Bauteile können unter anderem die Messelemente oder Sensorelemente zur Messung des winkelabhängigen Magnetfelds der an den Messrädern angebrachten umfassen. Die Bauteile können bevorzugt auf der zum Innenraum des Hohlrads gerichteten Innenseite der Platine angeordnet sein, wo sie geschützt in dem erfindungsgemäß geschlossenen Innenraum des Hohlrads untergebracht sind. Die Vorteile sind, dass die Leiterplatte neben der Funktion als mechanischer Träger und elektrisches Verbindungsmittel der Sensorschaltung sämtliche Funktionen der erfindungsgemäßen Innenwand übernehmen kann, den Innenraum abzuschließen und das Hohlrad axial abzustützen und/oder zu lagern. Dadurch kann der Fertigungs- und Montageaufwand reduziert werden.

Es ist möglich, dass die Platine sich flächenhaft eben senkrecht zur Achse erstreckt, und kreisrund ausgebildet ist, d.h. kreisscheibenförmig.

Die Erfindung umfasst Lenksystem für ein Kraftfahrzeug, umfassend eine um ihre Längsachse drehbare Lenkwelle, die mit einem Drehsensor zur Erfassung einer Drehung wirkverbunden ist, bei dem erfindungsgemäß vorgesehen ist, dass der Drehsensor ausgebildet ist mit den Merkmalen gemäß einer oder mehrerer der vorangehend beschriebenen Ausführungsformen.

Insbesondere ist es möglich, dass die Lenkwelle eine Lenkspindel einer Steer-by-Wire-Lenksäule ist, und der Drehsensor mit einem vorderen Endbereich der Lenkspindel gekuppelt ist. Dadurch wird eine vorteilhafte Integration des Drehsensors in eine Steer-by-Wire-Lenksäule ermöglicht, bei der die die Lenkwelle eine manuell drehbare Lenkspindel umfasst, die mit ihrem bezüglich der Fahrtrichtung vorderen, von der Fahrerposition abgewandten vorderen Ende nicht mechanisch mit den lenkbaren Rädern verbunden ist. Stattdessen kann bevorzugt am vorderen Ende der Lenkspindel ein erfindungsgemäßer Drehsensor zur Erfassung von manuellen Lenkbefehlen angebracht sein.

### Beschreibung der Zeichnungen

Vorteilhafte Ausführungsformen der Erfindung werden im Folgenden anhand der Zeichnungen näher erläutert. Im Einzelnen zeigen:
- Fig. 1: eine schematische Darstellung eines erfindungsgemäßen Steer-by-Wire-Lenksystems,
- Fig. 2: einen Drehsensor der Lenksäule gemäß Fig. 1 in einer schematischen perspektivische Ansicht,
- Fig. 3: eine weitere Ansicht des Drehsensors gemäß Fig. 2,
- Fig. 4: eine teilweise geöffnete Ansicht des Drehsensors gemäß Fig. 3,
- Fig. 5: einen Längsschnitt durch den Drehsensor gemäß Fig. 2 bis 4.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

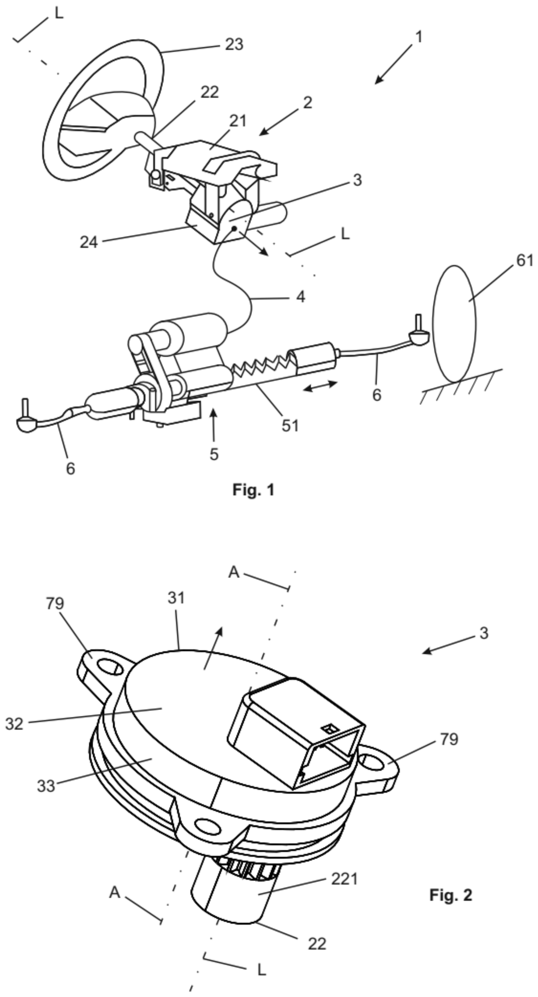

Fig. 1 zeigt schematisch ein Steer-by-wire-Lenksystem 1, welches eine Lenksäule 2 umfasst. Diese weist eine an einer nicht gezeigten Fahrzeugkarosserie montierbare Trageinheit 21 auf, von der eine Lenkspindel 22 um ihre Längsachse L drehbar in einer Manteleinheit 24 gelagert ist. An ihrem bezüglich der Fahrtrichtung hinteren, fahrerseitigen Ende ist an der Lenkspindel 22 zur Eingabe manueller Lenkbefehle ein Lenkrad 23 drehfest montiert.

Die Lenkspindel 22 stellt eine Lenkwelle im Sinne der Erfindung dar.

An der Lenksäule 2 ist ein erfindungsgemäßer Drehsensor 3 angebracht, welcher eine als Drehung des Lenkrads 23 in die Lenkspindel 22 eingebrachten Lenkbefehl erfasst, der in Fig. 1 schematisch angedeutet, und in den Darstellungen der Fig.2 bis 5 im Detail erläutert ist..

Die von dem Drehsensor 3 erfasst Lenkeingabe von einer Steuereinheit in ein elektrisches Steuersignal, nämlich ein Lenksignal umsetzt, welches über eine elektrische Steuerleitung 4 an einen elektrischen Lenkaktuator 5 geleitet wird.

Der Lenkaktuator 5 weist einen elektro-motorischen Linearantrieb auf, beispielsweise einen an sich bekannten Spindeltrieb oder dergleichen. Durch diesen kann abhängig von der Ansteuerung durch elektrische Lenksignale eine Aktuatorstange 51 linear bewegt werden, wie mit dem Doppelpfeil angedeutet ist.

Über Spurstangen 6 ist die Aktuatorstange 51 in bekannter Weise an die Achsschenkel von lenkbaren Räder 61 angelenkt.

Der erfindungsgemäß ausgestaltete Drehsensor 3 ist an einem in Fahrtrichtung des Fahrzeugs vorne liegenden, von dem Lenkrad 23 abgewandten Endabschnitt 221 mit der Lenkspindel 22 verbunden, der in der Ansicht von Fig. 1 schräg nach rechts unten gerichtet ist. Diese Vorwärtsrichtung der Längsachse L ist mit dem Pfeil angedeutet.

Der in dem dargestellten Beispiel an der Lenkspindel angebrachte Drehsensor 3 kann im Prinzip auch an anderen Stellen in dem Lenksystem 1 eingesetzt werden, beispielsweise, um die Drehung des Ritzels 25 zu erfassen, um die Position der Zahnstange zu ermitteln.

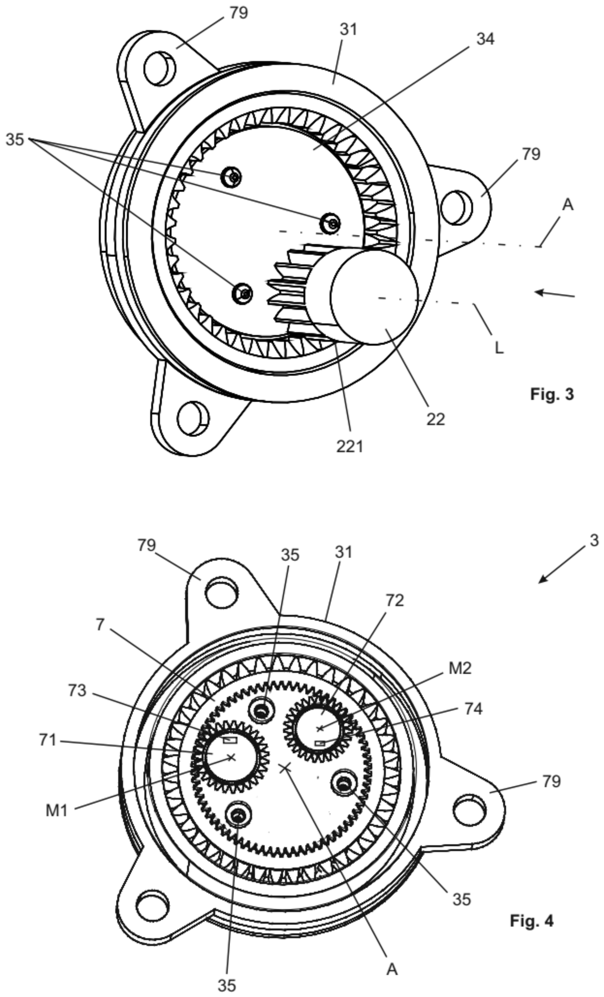

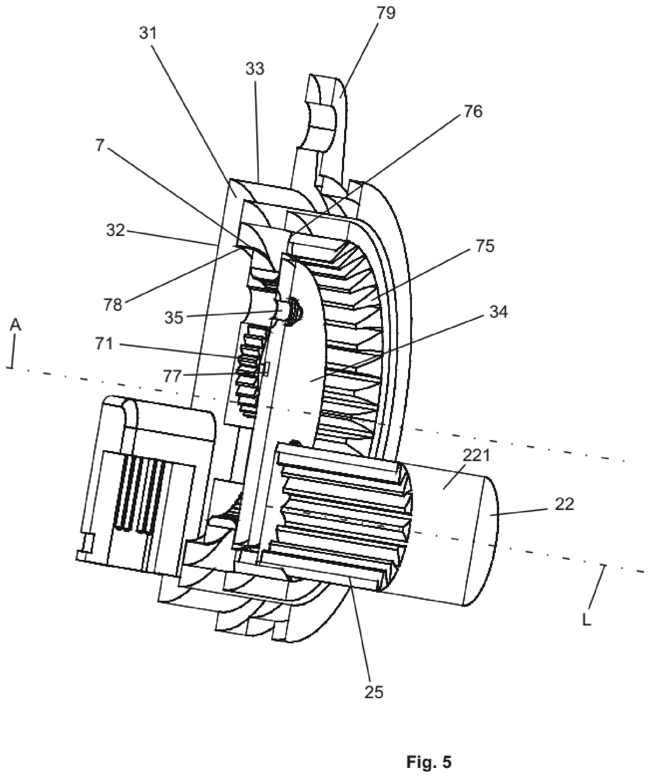

In den Darstellungen von Fig. 2, 3, 4 und 5 ist der Drehsensor 3 einzeln freigestellt gezeigt. Fig. 2 In Fig. 2 ist eine perspektivische Ansicht auf die Vorderseite gezeigt, nämlich schräg zur Längsrichtung der Längsachse L, die mit dem Pfeil eingezeichnet ist. Fig. 3 zeigt eine perspektive Ansicht schräg von hinten, die in Fig. 4 teilweise demontiert ist. Fig. 5 zeigt in perspektivischen Ansicht einen Längsschnitt entlang der Längsachse L.

Der Drehsensor 3 weist ein topf- oder becherförmig ausgebildetes Gehäuse 31 auf, mit einer axial außen liegenden Stirnwand 32, die mit einer hohlzylindrisch um eine Achse A umlaufenden Umfangswand 33 verbunden ist, die auch als Mantelwand bezeichnet werden kann. Die Stirnwand 32 ist erfindungsgemäß durchgehend geschlossen ausgebildet, insbesondere im Bereich der Längsachse L und der Achse A.

In dem Gehäuse 31 ist ein Hohlrad 7 mit einer koaxial um die Achse A umlaufenden Innenverzahnung um diese Achse A drehbar gelagert, wie in Fig. 4 und 5 erkennbar ist. Die Innenverzahnung umschließt mit ihrem axialen Durchgang einen Innenraum des Hohlrads 7. Dieser ist in Längsrichtung nach vorn durch die Stirnwand 32 geschlossen, und auf der dieser gegenüberliegenden axialen Innenseite durch eine kreisscheibenförmige Innenwand 34. Das Hohlrad 7 ist somit axial zwischen der Stirnwand 32 und der Innenwand 34 angeordnet.

In der Darstellung von Fig.4 ist die Innenwand 34 zur besseren Übersicht weggelassen. In dem darin frei einsehbaren Innenraum sind zwei Messräder 71 und 72 um ihre Achsen M1 und M2 drehbar gelagert und greifen im Verzahnungseingriff in die Innenverzahnung ein. Die Achsen M1 und M2 sind mit radialem Abstand parallel zur Achse A angeordnet.

Die beiden Messräder 71 und 72 weisen unterschiedliche Zähnezahlen auf, und tragen jeweils ein mitrotierendes Magnetelement 73 bzw. 74, wie in Fig.4 erkennbar ist.

Die Innenwand 34 ist mittels Befestigungsmittel 35, die sich durch den Innenraum axial erstrecken, an der Stirnwand 32 fixiert. Die Befestigungsmittel 35 an die Stirnwand 32 angeformte Zapfen oder dergleichen aufweisen, die in Richtung der Achse A axial in den Innenraum vorstehen. Auf diesen kann die Innenwand 42 fixiert sein, wie Fig. 3 entnehmbar ist.

Wie die Stirnwand 32 ist auch die Innenwand 34 im zentralen Bereich der Achse A durchgehend geschlossen ausgebildet.

Der Innenraum des Hohlrads 7 ist erfindungsgemäß durch die Stirnwand 32 und die Innenwand 34 und die außen umlaufende Innenverzahnung begrenzt und geschlossen.

Die Längsachse L der Lenkspindel 20 ist im Beispiel mit radialem Abstand parallel zur Achse A des Hohlrads 7 angeordnet, wie in Fig. 3 und 5 gut erkennbar ist.

Im vorderen Endabschnitt 221 ist an der Lenkspindel 22 ein Ritzel 25 angebracht. Dieses greift mit seiner Außenverzahnung in die Innenverzahnung eines Antriebsrads 75 ein. Dieses weist einen koaxial um die Achse A umlaufenden Innen-Zahnkranz auf, der axial durch einen zwischen der Innenwand 34 und dem Gehäuse 31 ausgebildeten, um die Achse A koaxial umlaufenden Ringspalt 76 hindurch, der in Fig. 5 eingezeichnet ist, drehfest mit dem Hohlrad 7 gekuppelt ist. Somit wird einen Drehung der Lenkspindel 22 um die Längsachse L in eine Drehung des Antriebsrads 75 und des damit gekuppelten Hohlrads 7 umgesetzt.

Das Kupplungselement zwischen dem Antriebsrad 75 und dem Hohlrad 7 kann beispielsweise durch ein einstückige Verbindung realisiert sein, beispielsweise durch ein einstückiges Kunststoff-Spritzgussteil. Alternativ ist es auch denkbar und möglich, dass ein lösbarer Kupplungseingriff zwischen der Lenkspindel 22 und dem Hohlrad 7 realisiert ist, beispielsweise durch Formschlusselemente, die axial durch den besagten Ringspalt 76 hindurchgreifen.

Die Innenwand 34 kann eine Platine aufweisen, d.h. eine Leiterplatte aus einem Isolierwerkstoff mit elektrischen Leiterbahnen, die als Träger für eine elektronische Steuerschaltung dient. Diese kann bevorzugt auf der dem Hohlrad 7 zugewandten Innenseite im Innenraum angeordnet sein, und kann bevorzugt auch den Magnetelementen 73 und 74 zugeordnete Messelemente 77 aufweisen, wie in Fig. 5 angedeutet ist.

Das Hohlrad 7 kann auf der Innenwand 34 drehbar gelagert sein, etwa wie in dem gezeigten Beispiel dadurch, dass die Innenwand 34 kreisrund ausgebildet ist und in eine koaxiale Vertiefung des Hohlrads 7 axial eingreift. Eine ähnliche Axiallagerung kann durch einen von der Stirnwand 32 axial vorstehenden koaxialen Vorsprung 78 realisiert sein, auf dem das Hohlrad 7 drehbar gelagert ist. Dieser kann einstückig an das Gehäuse 31 angeformt sein.

Das Gehäuse 31 kann Verbindungsmittel zur Anbringung an der Lenksäule 2 aufweisen, beispielsweise einen Flansch 79 oder dergleichen. Dieser kann ebenfalls einstückig angeformt sein.

### Bezugszeichenliste

- 1: Lenksystem
- 2: Lenksäule
- 21: Trageinheit
- 22: Lenkspindel
- 221: Endabschnitt
- 23: Lenkrad
- 24: Manteleinheit
- 25: Ritzel
- 3: Drehsensor
- 31: Gehäuse
- 32: Stirnwand
- 33: Umfangswand
- 34: Innenwand
- 35: Befestigungsmittel
- 4: Steuerleitung
- 5: Lenkaktuator
- 51: Aktuatorstange
- 6: Spurstange
- 61: Rad
- 7: Hohlrad
- 71, 72: Messrad
- 73, 74: Magnetelement
- 75: Antriebsrad
- 76: Ringspalt
- 77: Messelement
- 78: Vorsprung
- 79: Flansch
- L: Längsachse
- A: Achse
- M1: Achse
- M2: Achse

## Patentansprüche

1. Drehsensor (3) für ein Lenksystem (1) eines Kraftfahrzeug, umfassend ein Hohlrad (7), welches in einem Gehäuse (31) um eine Achse (A) drehbar gelagert ist, und eine Innenverzahnung und ein zur Verbindung mit einer um ihre Längsachse (L) drehbaren Lenkwelle (22) ausgebildetes Kupplungselement aufweist,
wobei das Gehäuse (31) eine axiale Stirnwand (32), eine axiale Innenwand (34), und eine koaxial umlaufende Umfangswand (33) aufweist, wobei das Hohlrad (7) axial zwischen der Stirnwand (32) und der Innenwand (34) angeordnet ist und von der Umfangswand (33) bezüglich der Achse (A) umlaufend umschlossen ist, und
wobei mindestens Messrad (71, 72), das ein Magnetelement (73, 74) aufweist, in dem Gehäuse (31) drehbar gelagert ist und mit iseiner Außenverzahnung in die Innenverzahnung des Hohlrads (7) eingreift, und
wobei in dem Gehäuse (31) mit den Magnetelementen (73, 74) des Messrads (71, 72) zusammenwirkende Messelemente (77) angebracht sind,
**dadurch gekennzeichnet,**
**dass** die Stirnwand (32) und die Innenwand (34) über einen von der Innenverzahnung umschlossenen Innenraum durchgehend geschlossen ausgebildet sind.

2. Drehsensor nach Anspruch 1, **dadurch gekennzeichnet, dass** in dem Gehäuse (31) mindestens zwei Messräder (71, 72) drehbar gelagert sind, die jeweils ein Magnetelement (73, 74) aufweisen, und jeweils mit ihrer Außenverzahnung in die Innenverzahnung des Hohlrads (7) eingreifen, und wobei in dem Gehäuse (31) mit den Magnetelementen (73, 74) der Messräder (71, 72) zusammenwirkende Messelemente (77) angebracht sind.

3. Drehsensor nach einem der vorangehenden Ansprüche, **dadurch gekennzeichnet, dass** das Hohlrad (7) einen umfangsseitig von der Innenverzahnung begrenzten axialen Innenraum aufweist.

4. Drehsensor nach einem der vorangehenden Ansprüche, **dadurch gekennzeichnet, dass** das Hohlrad (7) axial gegen die Stirnwand (32) und/oder die Innenwand (34) abgedichtet ist.

5. Drehsensor nach einem der vorangehenden Ansprüche, **dadurch gekennzeichnet, dass** das Hohlrad (7) in einer Axiallageranordnung (78) an der Stirnwand (32) und/oder der Innenwand (34) gelagert ist.

6. Drehsensor nach einem der vorangehenden Ansprüche, **dadurch gekennzeichnet, dass** die Innenwand (34) in einer Lagervertiefung des Hohlrads (7) drehbar eingesetzt ist.

7. Drehsensor nach einem der vorangehenden Ansprüche, **dadurch gekennzeichnet, dass** die Innenwand (34) über mindesten ein durch den Innenraum axial durchgehendes Verbindungsmittel (35) mit der Stirnwand (32) verbunden ist.

8. Drehsensor nach einem der vorangehenden Ansprüche, **dadurch gekennzeichnet, dass** außen um die Innenwand (34) ein koaxialer, axial offener Ringspalt (76) ausgebildet ist.

9. Drehsensor nach Anspruch 8, **dadurch gekennzeichnet, dass** das Kupplungselement sich durch den Ringspalt (76) erstreckt.

10. Drehsensor nach einem der vorangehenden Ansprüche, **dadurch gekennzeichnet, dass** das Gehäuse (31) topfförmig ausgebildet ist.

11. Drehsensor nach einem der vorangehenden Ansprüche, **dadurch gekennzeichnet, dass** die Stirnwand (32) zusammen mit der Umfangswand (33) einstückig ausgebildet ist.

12. Drehsensor nach einem der vorangehenden Ansprüche, **dadurch gekennzeichnet, dass** das Gehäuse (31) Befestigungsmittel (79) aufweist.

13. Drehsensor nach einem der vorangehenden Ansprüche, **dadurch gekennzeichnet, dass** die Messräder (71, 72) an der Stirnwand (32) gelagert sind.

14. Drehsensor nach einem der vorangehenden Ansprüche, **dadurch gekennzeichnet, dass** die Innenwandung (34) oder das Gehäuse (31) eine Platine aufweist.

15. Lenksystem (1) für ein Kraftfahrzeug, umfassend eine um ihre Längsachse (L) drehbare Lenkwelle (22), die mit einem Drehsensor (3) zur Erfassung einer Drehung wirkverbunden ist,
**dadurch gekennzeichnet,**
**dass** der Drehsensor (3) ausgebildet ist gemäß einem der vorangehenden Ansprüche 1 bis 14.
